# FASCICULE DE BREVET EUROPEEN

(11) **EP 0 575 591 B1**
(45) Date de publication et mention de la délivrance du brevet: **10.06.1998**
(21) Numéro de dépôt: 93901769.5
(22) Date de dépôt: 25.11.1992
(51) Int. Cl.: B01D 53/04

(54) **PROCEDE DE PRODUCTION D'UN GAZ A TENEUR SUBSTANTIELLE EN OXYGENE**
VERFAHREN ZUR HERSTELLUNG EINES GASES MIT EINEM WESENTLICHEN GEHALT AN SAUERSTOFF
METHOD FOR PRODUCING A GAS HAVING A SUBSTANTIAL OXYGEN CONTENT

(30) Priorité: 26.11.1991 FR 9114545
(43) Date de publication de la demande: 29.12.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: ENGLER, Yves, F-94300 Vincennes (FR); PETRIE, Wilfrid, F-75003 Paris (FR); MONEREAU, Christian, F-75011 Paris (FR)
(74) Mandataire: Le Moenner, Gabriel
(86) Numéro de dépôt international: FR9201094
(87) Numéro de publication internationale: WO9310882

(56) Documents cités:
- EP-A- 0 038 410
- EP-A- 0 082 948
- EP-A- 0 158 262
- EP-A- 0 327 732
- EP-A- 0 451 677
- GB-A- 1 307 898

## Description

L'invention concerne un procédé de production d'un gaz à teneur substantielle en oxygène par adsorption d'azote de l'air, du genre où, sur une pluralité 〈〈 n 〉〉 d'adsorbeurs, on assure successivement et cycliquement, selon une période T, sur chacun desdits adsorbeurs, avec décalage dans le temps T/n d'un adsorbeur au suivant, les étapes suivantes :
a) production avec admission d'air, selon une direction dite à cocourant, jusqu'à pression haute du cycle,
b) dépressurisation incorporant une phase terminale de pompage à contre-courant jusqu'à une pression minimale du cycle, de l'ordre de 0,2 x 10⁵ Pa abs, la phase de pompage étant subdivisée en au moins deux sous-étapes de pompage,
c) repressurisation, incorporant une repressurisation finale à contre-courant avec du gaz non adsorbé;
d) le nombre d'adsorbeurs n et les durées respectives desdites étapes étant tels qu'à tout moment au moins deux adsorbeurs se situent dans la phase de pompage de l'étape de dépressurisation, à des niveaux de pression différents,
e) chaque sous-étape de pompage a une même durée, égale à T/n ou à un sous-multiple de T/n, et est associée à un moyen de pompage spécifique aux conditions de débit et de variation de pression de ladite sous-étape; et
f) chaque moyen de pompage est immédiatement permuté d'un adsorbeur en fin de la sous-étape associée audit moyen de pompage vers un autre adsorbeur en début de ladite sous-étape.

Dans les procédés classiques de production d'un gaz à teneur substantielle en oxygène, pour assurer le pompage qui s'étend, au cours d'une dépressurisation, de la pression atmosphérique, ou légèrement moins si un équilibrage est assuré entre un adsorbeur en début de repressurisation, jusqu'à la pression basse du cycle, avec rejet d'un mélange gazeux résiduaire à l'atmosphère, on utilise généralement des compresseurs volumétriques du type 〈〈 Roots 〉〉, qui, s'ils sont appropriés à traiter de forts débits, n'acceptent, à des niveaux de pressions d'environ 0,2 x 10⁵ Pa abs., que des différences de pression relativement faibles entre entrée et sortie, de l'ordre de 0,5 x 10⁵ Pa. Pour des taux de compression plus importants, le rendement du compresseur chute, ce qui fait qu'on doit utiliser des compresseurs volumétriques bi-étagés, le second étage étant opératoire en série avec le premier étage lorsque la pression est descendue à l'aide du seul premier étage à une valeur de l'ordre de 0,5 x 10⁵ Pa abs., et l'on utilise partois, lorsque le débit pompé est important, un compresseur multi-étagé. Cette façon de faire est onéreuse, notamment en consommation d'énergie, et présente des difficultés de réalisation pour des unités de production à débits élevés.

Le document EP-A-0 451 677 décrit un procédé de production d'un gaz à teneur substantielle en azote lors de phases de dépressurisation à contre-courant par pompage en trois étapes au moyen de deux pompes, avec mise en oeuvre successivement d'une première pompe, des deux pompes en série pour la fourniture de l'azote de production, puis de la seule deuxième pompe.

Le document GB-A-1307898 décrit un procédé d'épuration d'azote par adsorption de dioxyde de carbone et de vapeur d'eau utilisant, pour les phases de régénération de l'adsorbeur, successivement une pompe à jet d'eau puis une pompe à haute capacité.

La présente invention a pour objet de proposer un procédé de production d'un gaz à teneur substantielle en oxygène permettant de réaliser la dépressurisation jusqu'à la pression basse de cycle de façon rapide, comme requis dans ce genre d'applications, à moindres coûts d'investissements et de consommations d'énergie.

Selon d'autres caractéristiques particulières du procédé :
1. Un moyen de pompage est du type compresseur volumétrique mis en oeuvre pour des sous-étapes de pompage à des pressions supérieures à une pression intermédiaire, de l'ordre de 0,5 x 105 Pa abs., et un second moyen de pompage est du type compresseur centrifuge mis en oeuvre pour des sous-étapes de pompage à des pressions comprises entre ladite pression intermédiaire et ladite pression minimale de cycle.
   Cette disposition permet d'allier la souplesse du compresseur volumétrique en ce qui concerne le niveau de pression d'admission et l'excellent rendement du compresseur centrifuge pour des taux de compression plus élevés.
2. Les différents moyens de pompage sont tous du type compresseur volumétrique, le moyen de pompage correspondant à une sous-étape de pompage quelconque -sauf la sous-étape initiale- comprenant un moyen élémentaire de pompage adjoint en série et en aval (selon le sens de circulation du gaz) au moyen de pompage d'une sous-étape de pompage qui la précède immédiatement, le nombre des moyens élémentaires de pompage correspondant à une sous-étape de pompage à dépression initiale donnée étant supérieur d'une unité au nombre de moyens élémentaires de pompage associés à la sous-étape de pompage qui la précède immédiatement, et plus particulièrement, dans une forme de réalisation, on prévoit que le nombre de sous-étapes de pompage est de deux, avec deux moyens de pompage principaux et un seul moyen élémentaire de pompage couplé alternativement à chacun desdits moyens de pompage principaux au cours de la sous-étape finale de pompage.
   Cette disposition, qui conduit pratiquement à l'utilisation exclusive de compresseurs volumétriques, par exemple du type "Roots", avec un compresseur principal auquel on adjoint de façon momentanée, à des pressions de 0,5 x 10⁵ Pa abs. ou plus basses, un ou plusieurs autres compresseurs -ou un compresseur à un ou plusieurs étages- -ou un ou plusieurs étages d'un compresseur principal multi-étagé--, permet de réduire au strict minimum les coûts d'investissements en machines tournantes.
3. Il y a autant de moyens de pompage élémentaires qu'il y a de sous-étapes de pompage, la sous-étape initiale de pompage mettant en oeuvre lesdits moyens de pompage élémentaires tous connectés en parallèle, le cas échéant en série-parallèle, au cours de sous-étapes intermédiaires éventuelles, et en série au cours de la sous-étape finale de pompage, et plus particulièrement, dans une forme de réalisation où le nombre de sous-étapes est de deux, avec deux moyens de pompage élémentaires successivement agencés en parallèle, puis en série.

Grâce à cette disposition, on utilise au mieux les possibilités du matériel mis en oeuvre en ce sens qu'on utilise par exemple deux pompes raccordées en parallèle lorsque le niveau de dépression reste modéré, ce qui permet d'accélérer considérablement le vidage, alors que les deux pompes sont branchées en série lorsque la dépressurisation descend en-dessous de 0,5 x 10⁵ Pa abs., ce qui permet d'opérer à taux de compression élevé. La disposition conforme à l'invention permet un important gain de temps pour réaliser l'opération de vidage ou un gain sur la taille de la pompe à vide à installer.

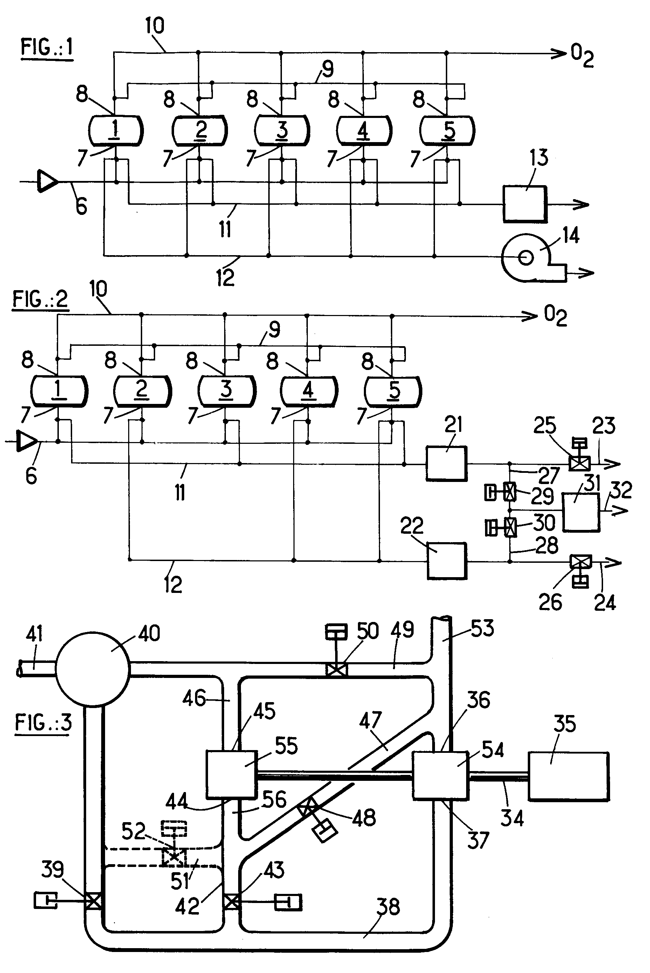

L'invention est maintenant décrite en relation avec les figures 1 à 3 qui représentent, respectivement, un premier et un second modes de réalisation d'une installation selon l'invention et un mode de réalisation d'un groupe de pompage pour la mise en oeuvre du procédé selon l'invention.

Dans le mode de réalisation de la figure 1, une installation de production d'un gaz à teneur substantielle en oxygène par adsorption d'azote met en oeuvre une pluralité n = 5 d'adsorbeurs 1, 2, 3, 4 et 5, alimentés cycliquement en air comprimé via une conduite 6 connectée, par des vannes opérant cycliquement et non représentées, aux entrées 7 des adsorbeurs 1-5, alors que chaque sortie de production 8 est connectée alternativement et cycliquement par un jeu de vannes non représentées soit à une conduite d'équilibrage 9 entre un adsorbeur en fin de production et/ou en cours de dépressurisation initiale et un adsorbeur en début et/ou en cours de repressurisation. Les sorties 8 sont également connectées à une conduite de production d'oxygène 10.

La régénération par dépressurisation -avantageusement terminée par une purge-élution avec de l'oxygène de production- est opérée à pression sous-atmosphérique et à cet effet, on prévoit deux lignes de vidage à partir de chaque "entrée" 7 des adsorbeurs, l'une 11 aboutissant à un compresseur volumétrique 13, l'autre 12 aboutissant à un compresseur centrifuge 14.

En fonctionnement de régénération, chaque adsorbeur 1-5 est d'abord soumis à l'action du compresseur volumétrique 13, via la ligne 11, depuis la pression atmosphérique, ou celle plus basse de fin d'équilibrage, jusqu'à une pression de l'ordre de 0,5 x 10⁵ Pa abs. Le compresseur volumétrique 13 est, selon les débits à soutirer, soit à un seul étage, soit à deux ou plusieurs étages.

Dès que la pression de l'ordre de 0,5 x 10⁵ Pa est atteinte, l'adsorbeur concerné est commuté sur la conduite 12 à partir de laquelle opère le compresseur centrifuge 14 particulièrement apte à réduire la pression de 0,5 à 0,2 x 10⁵ Pa abs.

Dans une unité de production de ce type, le cycle à une durée déterminée T, et l'opération de pompage d'un adsorbeur d'une durée égale à T/n, n étant le nombre total d'adsorbeurs, subdivisée typiquement en deux sous-étapes de durées égales (T/2n), de façon que lorsqu'une pompe 13 (ou 14) termine son opération sur un adsorbeur, elle soit amenée à débuter son opération sur un adsorbeur suivant, de sorte que les pompes 13 et 14 sont en permanence en charge.

En se référant à la figure 2, une unité de production d'oxygène est similaire à celle décrite à la figure 1, à ces différences près que les conduites 11 et 12 sont raccordées chacune à une pompe principale 21, 22 du type compresseur volumétrique, débitant chacune dans une conduite d'évacuation à l'atmosphère 23, 24 via une vanne 25, 26, respectivement. Entre une pompe 21 (22) et sa vanne associée 25 (26) est prévue une dérivation 27 (28) avec une vanne 29 (30), les dérivations aboutissant toutes deux à l'admission d'un autre compresseur 31, avantageusement également du type volumétrique, qui refoule dans l'atmosphère via une sortie 32, et qui généralement est un second étage d'une machine pluri-étagée, dont le premier étage est constitué par le compresseur 21 ou le compresseur 22. On peut faire en sorte d'ailleurs qu'une seule et même machine tournante incorpore trois étages dont les deux premiers identiques 21, 22, sont aptes à opérer, chacun, seul, une dépressurisation jusqu'à 0,5 x 10⁵ Pa abs, alors que le troisième étage 31 est apte à opérer, en série, avec l'un ou l'autre étage 21, 22, une dépressurisation jusqu'à 0,2 x 10⁵ Pa abs.

En fonctionnement, on comprend que, dans cette forme de réalisation, une conduite de vidage 11 est affectée à un adsorbeur, alors que l'autre conduite de vidage 12 est affectée à un autre adsorbeur -avec toujours déphasage de T/2n entre les opérations de vidage concernées-. La conduite de vidage 11 est d'abord associée à un seul étage de pompage 21, alors que l'autre conduite de vidage 12 est associée aux deux étages de pompage 22 et 31 agencés en série (vannes 25 et 30 ouvertes, vannes 26 et 29 fermées). Après un laps de temps d'une durée égale à T/2n, au bout duquel la conduite 11 est à une pression de l'ordre de 0,5 x 10⁵ Pa abs. et la conduite 12 à une pression de l'ordre de 0,2 x 10⁵ Pa abs., on permute les vannes (vannes 26 et 29 ouvertes, vannes 25 et 30 fermées), si bien que les opérations de pompage se poursuivent au niveau de la conduite 11 sur le même adsorbeur, alors qu'une opération de début de pompage est initiée sur l'adsorbeur suivant.

On a représenté sur la figure 3 une variante de réalisation d'un sous-ensemble de pompage de résiduaires provenant d'au moins un adsorbeur via une conduite 53, comprenant une pompe bi-étagée (premier étage 54, second étage 55) disposée sur un arbre menant 34 entraîné par un moteur 35. Le premier étage de pompe 54 a son admission 36 directement raccordée à la conduite d'aspiration 53, alors que son refoulement 37 est raccordé, d'une part par une conduite 38 à vanne 39, à un silencieux 40 de décharge à l'air en 41, d'autre part, par une conduite 42 à vanne 43, à l'admission 44 du second étage de pompe 55, dont le refoulement 45 est directement raccordé par une conduite 46 au silencieux 40. La conduite d'alimentation 53 est par ailleurs raccordée, d'une part par une conduite 47 à vanne 48, à l'admission 44 du second étage 55, d'autre part, par une conduite 49 à vanne 50, au silencieux 40. La conduite 42 est elle-même raccordée, entre vanne 43 et admission 44 du second étage 55, à une conduite 51 à vanne 52, communiquant avec le silencieux 40 de mise à l'air.

Le fonctionnement de ce sous-ensemble de pompage est le suivant : au début du pompage, et jusqu'à une pression de l'ordre de 0,5 x 10⁵ Pa dans la conduite d'aspiration de résiduaires 53, les vannes 39 et 48 sont ouvertes, les vannes 50, 43 et 52 sont fermées, de sorte que les deux étages 54 et 55 débitent en parallèle dans le silencieux 40, l'un (54) via la conduite 38, l'autre (55) étant alimenté par la conduite 47 et refoulant dans la conduite 46. Un débit maximal peut donc être pompé jusqu'à une dépression de l'ordre de 0,5 x 10⁵ Pa abs. Lorsqu'une dépression de l'ordre de 0,5 x 10⁵ Pa abs. est atteinte, les vannes 39 et 48 se ferment, la vanne 50 restant fermée, tandis que les vannes 43 et 52 s'ouvrent. Les gaz résiduaires parviennent alors seulement au premier étage 54 qui les refoule via 38, 43, 42, à l'admission 44 du second étage 55 qui les refoule dans le silencieux de mise à l'air 40. Les premier et second étages 54, 55 fonctionnent alors en série et peuvent alors aisément atteindre la pression finale de 0,2 x 10⁵ Pa abs. On note que le passage du branchement parallèle au branchement série des pompes 54 et 55 doit éviter la mise sous vide trop poussé de la conduite 56 directement à l'aspiration de la pompe 55. A cet effet, on peut par exemple retarder de quelques dizièmes de seconde l'ouverture de la vanne 43 par rapport à la fermeture des vannes 48 et 39 ou, le cas échéant, faire une légère entrée d'air via la conduite 51 et la vanne 52 ouverte pendant un laps de temps très court.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

## Revendications

1. Procédé de production d'un gaz à teneur substantielle en oxygène par adsorption d'azote de l'air, du genre où, avec une pluralité "n" d'adsorbeurs (1-5), on assure successivement et cycliquement, selon une période T, sur chacun des adsorbeurs, avec décalage dans le temps T/n d'un adsorbeur au suivant, les étapes suivantes :
a) production avec admission d'air, selon une direction dite à co-courant, jusqu'à une pression haute du cycle ;
b) dépressurisation incorporant une phase terminale de pompage à contre-courant jusqu'à une pression minimale du cycle, de l'ordre de 0,2 x 10⁵ Pa abs, la phase de pompage étant subdivisée en au moins deux sous-étapes de pompage ;
c) repressurisation, incorporant une repressurisation finale à contre-courant avec du gaz non adsorbé ;
d) le nombre d'adsorbeurs n et les durées respectives desdites étapes étant tels qu'à tout moment au moins deux adsorbeurs se situent dans la phase de pompage de l'étape de dépressurisation (b), à des niveaux de pression différents ;
e) chaque sous-étape de pompage a une même durée, égale à T/n ou à un sous-multiple de T/n, et est associée à un moyen de pompage (13 ou 14) (21, ou 21 et 31, ou 22 et 31) (54 et 55 en parallèle, ou 54 et 55 en série) spécifique aux conditions de débit et de variation de pression de ladite sous-étape ; et
f) chaque moyen de pompage est immédiatement permuté d'un adsorbeur en fin de la sous-étape associée audit moyen de pompage vers un autre adsorbeur en début de ladite sous-étape.

2. Procédé selon la revendication 1, caractérisé en ce qu'un moyen de pompage est du type compresseur volumétrique (13) mis en oeuvre pour des sous-étapes de pompage à des pressions supérieures à une pression intermédiaire, de l'ordre de 0,5 x 10⁵ Pa abs., et un second moyen de pompage est du type compresseur centrifuge (14) mis en oeuvre pour des sous-étapes de pompage à des pressions comprises entre ladite pression intermédiaire et ladite pression minimale de cycle.

3. Procédé selon la revendication 1, caractérisé en ce que les différents moyens de pompage sont tous du type compresseur volumétrique (21, 22, 31), le moyen de pompage correspondant à une sous-étape de pompage quelconque -sauf la sous-étape initialecomprenant un moyen élémentaire de pompage (21 ou 22) adjoint en série, et en aval, au moyen de pompage d'une sous-étape de pompage qui la précède immédiatement, le nombre des moyens élémentaires de pompage correspondant à une sous-étape de pompage à dépression initiale donnée étant supérieur d'une unité au nombre de moyens élémentaires de pompage associés à la sous-étape de pompage qui la précède immédiatement (31), le nombre des moyens élémentaires de pompage correspondant à une sous-étape de pompage à dépression initiale données (tel 21 et 31) étant supérieur d'une unité au nombre de moyens élémentaires de pompage (tel 22) associés à la sous-étape de pompage qui la précède immédiatement.

4. Procédé selon la revendication 3, caractérisé en ce que le nombre de sous-étapes de pompage est de deux, avec deux premiers moyens de pompage (21, 22) et un seul moyen de pompage (31) couplé alternativement à chacun des premiers moyens de pompage (21 ou 22) au cours de la sous-étape finale de pompage.

5. Procédé selon la revendication 1, caractérisé en ce qu'il y a autant de moyens de pompage élémentaires (tels 54-55) qu'il y a de sous-étapes de pompage, en ce que les moyens de pompage élémentaires (tels 54 et 55) sont mis en oeuvre en parallèle au cours de la sous-étape initiale de pompage et en série au cours de la sous-étape finale de pompage.

## Claims

1. Method for producing a gas with a substantial oxygen content by adsorption of nitrogen from the air, of the type where, with a plurality "n" of adsorbers (1-5), the following stages are carried out successively and cyclically, over a period T, on each of the adsorbers, with a time lag T/n from one adsorber to the next :
a) production with air intake, in a so-called co-current direction, to a high pressure of the cycle;
b) depressurization incorporating a counter-current terminal pumping phase to a minimum pressure of the cycle, of the order of 0.2 × 10⁵ Pa abs, the pumping phase being subdivided into at least two pumping sub-steps;
c) repressurization, incorporating a final repressurization counter-current to the non-adsorbed gas;
d) the number n of adsorbers and the respective durations of the said steps being such that at any moment at least two adsorbers are in the pumping phase of the depressurization step (b), at different pressure levels;
e) each pumping sub-step has the same duration, equal to T/n or a submultiple of T/n, and is associated with a means of pumping (13 or 14) (21, or 21 and 31, or 22 and 31) (54 and 55 in parallel, or 54 and 55 in series) specific to the flow rate and pressure variation conditions of the said sub-step; and
f) each means of pumping is immediately switched from an adsorber at the end of the sub-step associated with the said means of pumping to another adsorber at the start of the said sub-step.

2. Method according to claim 1, characterized in that one means of pumping is of the volumetric compressor type (13) employed for the pumping sub-steps at pressures greater than an intermediate pressure, of the order of 0.5 × 10⁵ Pa abs., and a second means of pumping is of the centrifugal compressor type (14) employed for the pumping sub-steps at pressures between the said intermediate pressure and the said minimum cycle pressure.

3. Method according to claim 1, characterized in that the various means of pumping are all of the volumetric compressor type (21,22,31), the means of pumping corresponding to any pumping sub-step (except the initial sub-step) comprising an elementary means of pumping (21 or 22) joined in series, and upstream to the means of pumping of a pumping sub-step which immediately precedes it, the number of elementary means of pumping corresponding to a pumping sub-step with a given initial pressure reduction being greater by one unit than the number of elementary means of pumping associated with the pumping sub-step which immediately precedes it (31), the number of elementary means of pumping corresponding to a pumping sub-step with a given initial pressure reduction (such as 21 and 31) being greater by one unit than the number of elementary means of pumping (such as 22) associated with the pumping sub-step which immediately precedes it.

4. Method according to claim 3, characterized in that the number of pumping sub-steps is 2, with two first means of pumping (21,22) and a single means of pumping (31) coupled alternately to each of the first means of pumping (21 or 22) during the final pumping sub-step.

5. Method according to claim 1, characterized in that there are as many elementary means of pumping (such as 54, 55) as there are pumping sub-steps, and in that the elementary means of pumping (such as 54 and 55) are used in parallel during the initial pumping sub-step and in series during the final pumping sub-step.

## Patentansprüche

1. Verfahren zur Herstellung eines Gases mit einem wesentlichen Gehalt an Sauerstoff durch Adsorption von Stickstoff der Luft, bei dem mit einer Anzahl "n" von Adsorbern (1 bis 5) in einer Periode T nacheinander und zyklisch mit einer zeitlichen Verschiebung von T/n zwischen aufeinanderfolgenden Adsorbern an jedem der Adsorber folgende Schritte ausgeführt werden:
a) Produzieren mit Zufuhr von Luft in einer sog. Mitstromrichtung bis zu einem hohen Kreisdruck;
b) Druckmindern mit einer abschließenden Pumpphase im Gegenstrom bis auf einen minimalen Kreisdruck in dem Bereich von 0,2 x 10⁵ Pa abs., wobei die Pumpphase mindestens in zwei Pumpschritte unterteilt ist;
c) Unterdrucksetzen mit einem endgültigen Unterdrucksetzen im Gegenstrom zu nicht adsorbiertem Gas
d) die Anzahl n der Adsorber und die entsprechende Dauer der einzelnen Schritte werden so gewählt, daß sich zu jedem Zeitpunkt mindestens zwei Adsorber in der Pumpphase des Druckminderschritts (b) befinden, und zwar unter unterschiedlichen Drücken;
e) jeder Pumpschritt hat dieselbe Dauer, die gleich T/n oder gleich einem Vielfachen von T/n ist, und ist einem Pumpmittel (13 oder 14), (21 oder 21 und 31 oder 22 und 31) (54 und 55 parallel oder 54 und 55 in Reihe) zugeordnet, das speziell für die Durchflußbdingungen und Druckschwankungen dieses Schritts ausgelegt ist;
f) jedes Pumpmittel wird sofort von einem Adsorber am Ende des dem Pumpmittel zugeordneten Schritts zu einem anderen Adsorber am Anfang dieses Schritts umgeschaltet.

2. Verfahren nach Anspruch 1, dadurch gekennzeichnet, daß ein Pumpmittel ein volumetrischer Verdichtertyp (13) ist, der bei Pumpschritten auf Drucke oberhalb eines Zwischendrucks, in dem Bereich von 0,5 x 10⁵ Pa abs., eingesetzt wird und ein zweites Pumpmittel ein Zentrifugenverdichtertyp (14) ist, der bei Pumpschritten auf zwischen dem Zwischendruck und dem Minimaldruck des Kreises liegenden Drucken eingesetzt wird.

3. Verfahren nach Anspruch 1, dadurch gekennzeichnet, daß die verschiedenen Pumpmittel alle volumetrische Verdichtertypen (21, 22, 31) sind, wobei die irgendeinem Pumpschritt - außer dem anfänglichen Pumpschritt - entsprechenden Pumpmittel ein elementares Pumpmittel (21 oder 22) umfassen, das in Reihe und stromab des Pumpmittels eines Pumpschritts hinzugefügt ist, der unmittelbar vor diesem abläuft, die Anzahl der elementaren Pumpmittel, die einem Pumpschritt mit gegebenem anfänglichen Unterdruck entsprechen, um eins größer als die Anzahl von elementaren Pumpmitteln ist, die dem Pumpschritt zugeordnet sind, der unmittelbar vor diesem abläuft (31), und die Anzahl von elementaren Pumpmitteln (wie 21 und 31), die einem Pumpschritt mit gegebener anfänglicher Druckminderung entsprechen, um eins größer als die Anzahl von elementaren Pumpmitteln (wie 22) ist, die dem Pumpschritt zugeordnet sind, der unmittelbar vor diesem abläuft.

4. Verfahren nach Anspruch 3, dadurch gekennzeichnet, daß die Anzahl an Pumpschritten gleich zwei ist, mit zwei ersten Pumpmitteln (21, 22) und einem einzigen Pumpmittel (31), das beim endgültigen Pumpschritt abwechselnd mit jedem der ersten Pumpmittel (21 oder 22) verbunden ist.

5. Verfahren nach Anspruch 1, dadurch gekennzeichnet, daß es ebensoviele elementare Pumpmittel (wie 54 bis 55) wie Pumpschritte gibt, daß die elementaren Pumpmittel (wie 54 und 55) beim anfänglichen Pumpschritt parallel und beim abschließenden Pumpschritt in Reihe geschaltet sind.
